# EUROPÄISCHE PATENTSCHRIFT

(11) **EP 1 974 425 B1**
(45) Veröffentlichungstag und Bekanntmachung des Hinweises auf die Patenterteilung: **27.06.2012**
(21) Anmeldenummer: 07701264.9
(22) Anmeldetag: 17.01.2007
(51) Int. Cl.: H02G 3/04

(54) **HÜLLEN FÜR KABELFÜHRUNGEN**
SHEATHS FOR CABLE CONDUITS
GAINES DE GUIDES DE CABLES

(30) Priorität: 18.01.2006 AT 722006
(43) Veröffentlichungstag der Anmeldung: 01.10.2008
(73) Patentinhaber: Zahradnik, Anton, 1040 Wien (AT)
(72) Erfinder: Zahradnik, Anton, 1040 Wien (AT)
(74) Vertreter: Grabherr, Claudia
(86) Internationale Anmeldenummer: PCT/AT2007/000013
(87) Internationale Veröffentlichungsnummer: WO 2007/082326

(56) Entgegenhaltungen:
- DE-A1- 3 608 938
- DE-A1- 19 600 230
- FR-A- 2 812 465
- FR-A- 2 853 148
- US-A1- 2001 048 983

## Beschreibung

Die Erfindung betrifft Hüllen für Kabelführungen entsprechend dem Oberbegriff nach Anspruch 1.

Die gegenständliche Erfindung bezieht sich auf auswechselbare Hüllen zur Änderung des Abschirmungsvermögens von Kabelführungen elektrischer Leiter, wie Kabelkanälen, Kabeltassen, sowie anderen kabelführenden Bauelementen vorzugsweise für stromversorgende Leitungen vorwiegend im 220V-400V Bereich.

Um aus Kabelführungen austretenden Elektrosmog zu vermeiden und deren Umgebung von Elektrosmog freizuhalten soll dieser bereits in oder an den Kabelführungselementen abgeschirmt werden und zwar variabel, angeglichen an die örtlichen Erfordernisse, leicht nachrüstbar für bereits verlegte Leitungssysteme.

Es können in Kabelführungen partiell und je nach Bedarf an verschiedenen Stellen verschiedene Abschirmungseigenschaften erzielt werden.

Durch Aufstecken der erfindungsgemäßen Hüllen kann der Abschirmungsfaktor neuer oder bereits verlegter Kabelführungselemente jederzeit beliebig verändert und der entsprechenden Erfordernis angepasst werden, insbesondere alte, verlegte Kabelkanäle ohne oder mit geringem Abschirmungsvermögen können leicht und kostengünstig mit den erfindungsgemässen Hüllen nachgerüstet werden.

Die Erfindung soll die Stärke der Abschirmwirkung von Kabelführungselementen variabel, jederzeit austauschbar, abgestimmt auf den Bedarf gestalten lassen.

Elektrosmog besteht aus elektrischen und magnetischen Feldern welche durch elektrische Stromführungen verursacht werden und in der Umgebung störend wirken. Elektrische Felder sind nicht sehr weit reichend und leicht abschirmbar, wogegen magnetische Felder wesentlich weiter wirken.

Kabelführungen beziehungsweise kabelführende Bauelemente für Stromversorgungen in Gebäuden werden entweder aus Kunststoffen oder aus Metallen wie Stahl oder Aluminium angefertigt, zum Beispiel Kabelkanäle, Rohre, Schläuche, Schächte. In diese Kabelführungselemente werden üblicherweise unabgeschirmte Kabel und Einziehdrähte eingelegt.

Aus diesen elektrischen Leitern breitet sich Elektrosmog in die Umgebung aus folgenden Gründen aus:
1. Kabelführungen aus Kunststoffen schirmen die in den stromführenden Kabeln entstehenden magnetischen und elektrischen Felder nicht ab. Elektrosmog tritt aus.
2. Kabelkanäle aus Stahlblech schirmen magnetische Felder bei einer Frequenz von 50 Hertz, wie bei allgemeinen Stromversorgungen üblich, nicht ab; nur elektrische Felder werden abgeschirmt. Elektrosmog tritt als magnetisches Feld aus.
3. Abgeschirmte Kabel werden in Kabelführungen zur Stromversorgung in Gebäuden aus Kostengründen wegen des größeren Durchmessers ihrer Abschirmhülle sehr selten verwendet.
4. Bei Kabelführungen bestehend aus abschirmenden Kunststoffen, wie Mischungen von Kunststoffen oder Gummi mit abschirmenden Materialien wie Metallfasern, Metallpulvern, Kohlefasern, Kohlepulver usw. ergibt sich eine Dämpfung von austretendem Elektrosmog nur ab beträchtlichen kostenaufwendigen Materialstärken.
5. Kabelführungen als Kombinationen Kunststoff in Verbundbauweise mit abschirmenden Folien sind Kosten- und Materialaufwendig, deren Abschirmungsfaktor kann nicht nach Bedarf verändert werden.

Kabelführungen werden in Gebäuden üblicherweise in der Wand, in Schläuchen oder Rohren, an der Wand in Kabelkanälen aus Kunststoff, Stahl oder Aluminium, unter Flur als Kunststoff - oder Stahlkanäle oder unter der Decke in Trägersystemen verlegt.

Während elektrische Felder durch Mauerwerk und Stahl oder andere Metalle abschirmbar sind, dringen bei einer Frequenz von 50 Hertz magnetische Felder durch Mauerwerk und Stahl sowie Kunststoffe nach allen Seiten aus falls in diesen Kabelführungen keine abgeschirmten Kabel Verwendung finden.

Weiters ist die Abschirmwirkung weichmagnetischer Legierungen oder anderer Legierungen mit ähnlicher Wirkung durch deren hohe Permeabilität bekannt. Weichmagnetische Legierungen schirmen die aus Stromführungen austretenden elektrischen, sowie magnetischen Felder über den ganzen Frequenzbereich ab, während Stahl oder Aluminium zwar elektrische Felder abschirmt, jedoch bis zu einer Frequenz von etwa 100 KHZ für magnetische Felder nur geringe Abschirmwirkung zeigt.

Nach dem jetzigen Stand der Technik wird der Abschirmungsfaktor bereits verlegter oder auch neuer Kabelführungselemente nicht nachträglich geändert. Sollte zusätzliche Abschirmung erforderlich sein, so wird diese nicht an den Kabelführungselementen, sondern zumeist an Wänden oder an den abzuschirmenden Geräten vorgenommen. Daher bleibt die Einwirkung von Elektrosmog an Personen in zumindest großen Teilen der Umgebung bestehen. Die technische Aufgabe der Erfindung liegt darin, stromversorgende Kabelführungselemente beziehungsweise kabelführende Bauelemente aus Kunststoffen oder Metallen vorwiegend im Endverbraucherbereich 250-400V mit den erfindungsgemäßen vorgefertigten Hüllen aus Elektrosmog abschirmenden Materialien so auszustatten, dass diese an verschiedene Anforderungen bezüglich Abschirmungsvermögen angepasst werden können und auch alte, bereits verlegte Kabelkanäle entsprechend nachgerüstet werden können.

Je nach Schirmfaktor der Hüllen (abhängig von deren Materialdicke und -qualität) soll in neuen, wie auch bereits verlegten Kabelführungselementen eine Abschirmung, beziehungsweise Dämpfung der Ausstrahlung von niederfrequenten wie auch hochfrequenten elektrischen und magnetischen Feldern je nach örtlichen Begebenheiten und Bedarf modifizierbar sein. Herkömmliche stromversorgende Kabelführungen beziehungsweise kabelführende Bauelemente aus Kunststoff oder Metallen werden an der Wand, unter der Decke wie auch unter dem Fußboden geführt, daher können je nach Verlegungsart niederfrequente wie auch hochfrequente elektrische und magnetische Felder aus diesen Kabelführungen austreten und auf die Umgebung einwirken.

Gerade in Gebäuden für Büros, Wohnungen, Spitälern usw. werden solche Kabelführungen mit unabgeschirmten Kabeln oder Einziehdrähten unter dem Fußboden, an der W and oder unter der Decke ausgestattet. In Spitälern und Schlafstätten sowie Büros verlaufen Kabelführungen meistens in Kopf- oder Körpernähe. Elektrosmog kann daher andauernd und von vielen Seiten Personen und Geräte erreichen und auf diese einwirken.

Wenn die gesundheitsschädliche Einwirkung von niederfrequentem Elektrosmog dieser Grö-βenordnung auch umstritten ist, so ist dessen Langzeitwirkung in Bezug auf Empfindlichkeitsstörungen bei elektrosensiblen Personen sowie die Beeinträchtigung bei Patienten mit Implantaten wie Herzschrittmachern, Nervenstimulatoren, implantierte Insulinpumpen oder Hörprothesen usw. oder deren Störanfälligkeit erwiesen.

Die Verwendung elektrischer und elektronischer Geräte in Wohnungen, Büros, Spitälern nimmt jährlich rapide zu, Personen werden mit Elektrosmog überlastet, da der unvermeidbare Elektrosmog wie aus Bildschirm, Drucker, Scanner, Schreibtischinstallation oder Kühlschrank, Elektroherd, Mikrowellenherd usw. als weitere unvermeidbare Komponente zu dem Elektrosmog austretend aus den Kabelführungen noch hinzu zu zählen ist.

Daher zählt nicht nur die Einwirkung einzelner Geräte auf Personen wie man aus Tabellen entnehmen kann, sondern die Summe aller einwirkenden Felder, sowie deren Dauer, die vor allem in Bezug auf den Elektrosmog, ausgehend von Kabelführungen in verschiedenen Aufenthaltsräumen von allen Seiten beinahe kontinuierlich anhält.

Aus diesem Grunde liegt es in der Aufgabe dieser Erfindung die Abschirmung in den Kabelführungselementen an verschiedenen Stellen variabel gestalten zu können, wie zum Beispiel in Wohnbereichen und am Arbeitsplatz so, dass sich die Belastung von Personen und Geräten nur mehr auf die unvermeidbaren Quellen in täglichen Gebrauchsgeräten sowie auf den ebenso unvermeidbaren hochfrequenten Elektrosmog aus Mobiltelefon, Antennen, Funkfernsteuerungen und Übertragungsgeräten usw. beschränkt.

Die Erfindung soll sich nunmehr nicht allein auf die Abschirmungsausstattung von neu produzierten Kabelführungselementen beziehen sondern sie soll auch die Nachrüstmöglichkeit alter, bereits verlegter Kabelkanäle ermöglichen. Die Erfindung soll die Stärke der Abschirmwirkung in den Kabelführungselementen variabel, nach den örtlichen Gegebenheiten modifizierbar und jederzeit austauschbar, abgestimmt auf den Bedarf gestalten lassen. Vor allem, daß auch nach der erfolgten Verlegung von Kabelführungselementen diese durch variable Hüllen verschiedenen Abschirmungsvermögens abgestimmt auf den Bedarf leicht und kostengünstig gegen solche mit gewünschter Abschirmwirkung ausgetauscht werden können. Die Aufgabe wird dadurch gelöst, dass bereits verlegte oder auch noch nicht verlegte Kabelführungen elektrischer Stromversorgungen wie Kabelkanäle usw. mit Elektrosmog abschirmenden Hüllen versehen werden und dadurch deren Abschirmungsvermögen nach Wunsch, Bedarf und Ort veränderbar ist.

Die Hüllen zur Abschirmung elektrischer und magnetischer Felder austretend aus Kabelführungen beziehungsweise aus kabelführenden Bauelementen stromführender elektrischer Leiter, - vorgefertigt aus gebogenen und/oder gepressten und/oder gefalzten und/oder gefalteten und/oder faltbaren Blechen und/oder aus Folien und/oder Laminaten, beziehungsweise laminierten Folien, Netzen, Gewirken, Kunststoffcompounds oder vorgeformten Schäumen aus oder mit abschirmenden Substanzen wie weichmagnetischen Metalllegierungen, vorzugsweise solcher mit einem hohen Permeabilitätsverhalten oder anderen Materialien ähnlicher Abschirmungseigenschaften, welche bereits mit geringer Materialstärke eine optimale Abschirmung elektrischer, sowie magnetischer Felder bewirken, - können leicht, schnell und kostengünstig auf neue oder bereits verlegte Kabelführungselemente aufgesteckt und je nach Abschirmungsverhalten gegeneinander ausgetauscht werden.

Diese auf die Kabelführungselemente aufgesteckten Hüllen oder Schalen können mit Haftmedien ausgestattet werden sowie auch gegen andere Hüllen mit anderen Abschirmungsfaktoren austauschbar sein um allfällige Servicearbeiten oder Ergänzungsarbeiten zu erleichtern.

Die erfindungsgemäßen Hüllen sind je nach ihren vorgefertigten Abmessungen für verschieden ausgeführte Kabelführungselemente verschiedener Art, Herkunft und Qualität anwendbar. Je nach Abschirmungsbedarf kann für die Hüllen Folienmaterial, Laminate, Bleche verschiedener Stärke und Abschirmwirkung Verwendung finden, bzw. es können zu diesem Zweck zur örtlichen Verstärkung der Abschirmung auch mehrere Hüllen übereinander angebracht werden. Die Hüllen können leicht und schnell gegen solche mit anderen Abschirmungswerten ausgetauscht werden. Sie sind als Potentialausgleichsleiter ausgebildet.

Eine Nachrüstung bestehender Elektroinstallationen oder eine Änderung des Abschirmungsvermögens durch Auswechslung der passenden Hüllen in der Elektroinstallation, bei Bedarf auch nur in bestimmten Kabelführungsbereichen, kann somit nach dieser erfindungsgemäßen Abschirmungsmethode jederzeit rasch und ohne großen Aufwand erfolgen.

Die Herstellung der erfindungsgemäßen Hüllen erfolgt unter der Berücksichtigung der Maße und Profile aller verschiedenen Arten von Kabelführungselementen durch Schneiden, Stanzen, Falten, Falzen, Pressen, Formen, Biegen und dergleichen aus den entsprechenden, für den Einsatzzweck geeigneten und gewünschten Blechen, Folien, Netzen, Gewirken oder Laminaten, bzw. Drucken oder Metalllackierungen, Beschichtungen oder anderen Trägern von abschirmenden Substanzen in Bezug auf Schirmfaktor, Materialstärke und anderen gewünschten Eigenschaften.

## Patentansprüche

1. Hülle für eine Kabelführung wie Kabelkanäle, Kabeltassen, Schächte, Rohre sowie andere kabelführende Bauelemente zur Abschirmung des Austritts elektrischer und magnetischer Felder aus den in diesen Kabelführungen verlegten elektrischen Kabeln, **dadurch gekennzeichnet, dass** die Hülle geeignet ist, niederfrequente elektrische und magnetische Wechselfelder abzuschirmen und aus einer Schale besteht, die so bemessen ist, dass sie auf das Profil der Kabelführung aufsetzbar ist.

2. Hülle nach Anspruch 1, **dadurch gekennzeichnet, dass** die Schale einteilig ausgeführt ist und auf die Kabelführung aufsteckbar ist.

3. Hülle nach Anspruch 1, **dadurch gekennzeichnet, dass** die Schale zweiteilig ausgeführt ist und somit aus zwei Halbschalen besteht und die Halbschalen auf die Kabelführung aufsteckbar sind.

4. Hülle nach einem der Ansprüche 1 bis 3, **dadurch gekennzeichnet, dass** diese aus abschirmenden Materialien, vorzugsweise aus weichmagnetischen Legierungen in Form von Blechen, Laminaten, Geflechten, Netzen, Gewirken, Filzen, Schäumen oder Drucken sowie weiters aus Laminaten oder Kunststoffcompounds mit Kohle besteht.

5. Hülle nach einem der Ansprüche 1 bis 4, **dadurch gekennzeichnet, dass** die Schale als Potentialausgleichsleiter ausgebildet ist.

6. Hülle nach einem der Ansprüche 1 bis 5, **dadurch gekennzeichnet, dass** sich diese auch über mehrere Kabelführungen erstreckt.

## Claims

1. Sheath for a cable conduit, such as cable channels, cable trays, ducts, tubes and other cable-guiding components for insulating against the remission of electrical and magnetic fields from the electric cables laid in these cable conduits, **characterised in that** the sheath is suitable for screening off low-frequency alternating electrical and magnetic fields and consists of a shell of such dimensions that it can be fitted onto the profile of the cable conduit.

2. Sheath according to claim 1, **characterised in that** the shell is made in one piece and can be fitted onto the cable conduit.

3. Sheath according to claim 1, **characterised in that** the shell is made in two pieces and thus consists of two half-shells and the half-shells can be fitted onto the cable conduit.

4. Sheath according to one of claims 1 to 3, **characterised in that** it consists of screening materials, preferably soft magnetic alloys in the form of sheet metals, laminates, wire meshes, grids, knitted materials, felts, foams or pressings and also of laminates or synthetic compounds with carbon.

5. Sheath according to one of claims 1 to 4, **characterised in that** the shell is designed as potential-equalising conductors.

6. Sheath according to one of claims 1 to 5, **characterised in that** it also extends over a plurality of cable conduits.

## Revendications

1. Gaine d'un guide de câbles comme des canaux de câbles, des fermetures de câbles, des puits, des tubes ainsi que d'autres composants guidant des câbles, pour la protection de la sortie de champs électriques et magnétiques de câbles électriques posés dans ces guides de câbles, **caractérisée en ce que** la gaine est propre à protéger de champs alternatifs électriques et magnétiques à basses fréquences et est constituée d'une coquille de dimension telle qu'elle peut être posée sur le profil du guide de câbles.

2. Gaine suivant la revendication 1, **caractérisée en ce que** la coquille est d'une seule pièce et peut être enfilée sur le guide de câbles.

3. Gaine suivant la revendication 1, **caractérisée en ce que** la coquille est en deux pièces et est constituée ainsi de deux hémicoquilles et les hémicoquilles peuvent être enfilées sur le guide de câbles.

4. Gaine suivant l'une des revendications 1 à 3, **caractérisée en ce qu'**elle est en des matériaux de blindage, de préférence en des alliages à magnétisme doux, sous la forme de tôles, de stratifiés, de treillis, de filets, de tricots, de feutres, de mousses ou d'étoffes imprimées, ainsi que d'autres en stratifiés ou en composites de matière plastique avec du charbon.

5. Gaine suivant l'une des revendications 1 à 4, **caractérisée en ce que** la coquille est constituée en conducteur de compensation de potentiel.

6. Gaine suivant l'une des revendications 1 à 5, **caractérisée en ce qu'**elle s'étend aussi sur plusieurs guides de câbles.
